Europäisches Patentamt

European Patent Office

Office européen des brevets

(11) Numéro de publication: **0 330 538**
**A1**

## (12) DEMANDE DE BREVET EUROPEEN

(21) Numéro de dépôt: **89400354.0**

(22) Date de dépôt: **08.02.89**

(51) Int. Cl.⁴: **A 01 F 25/20**

(30) Priorité: **19.02.88 FR 8802006**

(43) Date de publication de la demande:
**30.08.89 Bulletin 89/35**

(84) Etats contractants désignés: **BE DE GB NL**

(71) Demandeur: **S.a.r.l. BOTON-MERLET**
**F-79320 Moncoutant (FR)**

(72) Inventeur: **Boton, Jacques**
**Route de Bressuire**
**F-79320 Moncoutant (FR)**

(74) Mandataire: **Robert, Jean-Pierre et al**
**CABINET BOETTCHER 23, rue la Boétie**
**F-75008 Paris (FR)**

(54) **Fourche de prélèvement d'une matière ensilée.**

(57) L'invention concerne une fourche pour le prélèvement d'une matière ensilée comprenant,
- un bâti (2) pourvu de dents (1) parallèles inscrites dans un contour (1a),
- un dispositif de coupe comprenant un support (18) pour un organe de coupe (19),
- un premier ensemble de leviers (13,20) articulés formant un pantographe reliant le dispositif de coupe à un axe fixe (4) supporté perpendiculairement au plan des dents (1) et à une distance déterminée de celui-ci,
- un organe suiveur (25) solidaire du pantographe et coopérant avec un chemin de guidage (27) fixe homothétique du contour des dents (1a),
- un second ensemble de leviers (25,28,30,32) articulés pour l'orientation du support de l'organe de coupe, formant avec le pantographe (13,20) un double parallélogramme articulé. L'organe suiveur et l'un des leviers de l'ensemble d'orientation sont constitués d'une pièce (25) unique articulée sur le pantographe montée à coulissement sur un bras pivotant (11) autour de l'axe fixe (4) susdit.

Fig.1

## Description

### Fourche de prélèvement d une matière ensilée

L'invention concerne une fourche de prélèvement d'une matière ensilée, qui possède un dispositif de découpage périmétrique permettant de découper un volume déterminé de matière le long d'un contour sensiblement identique au contour dans lequel les dents de la fourche sont inscrites.

Ce type de fourche est connu notamment par le brevet français n° 2 483 167, et comporte un outil de coupe (généralement une double-lame) monté verticalement en bout d'un bras de support déformable à la manière d'un pantographe, c'est-à-dire possédant un organe suiveur d'une piste déterminée homothétique du contour de la découpe à réaliser. En outre, ce bras est associé à un ensemble de leviers articulés qui servent à orienter les lames coupantes pour qu'elles présentent leur fil ou leurs dents frontalement dans le sens du déplacement du bras. Ce dispositif d'entraînement des lames de coupe est disposé au-dessus du plan des fourches à une distance correspondant sensiblement à la hauteur (longueur) des lames.

La présente invention entend apporter des simplifications constructives au dispositif décrit dans ce brevet et pour ce faire a plus précisément pour objet une fourche pour le prélèvement d'une matière ensilée comprenant :
- un bâti pourvu de dents parallèles inscrites dans un contour approximativement rectangulaire,
- un dispositif de coupe comprenant un support pour un organe de coupe,
- un premier ensemble de leviers articulés formant un pantographe reliant le dispositif de coupe à un axe fixe supporté perpendiculairement au plan des dents et à une distance déterminée de celui-ci,
- un organe suiveur solidaire du pantographe et coopérant avec un chemin de guidage fixe homothétique du contour des dents,
- un second ensemble de leviers articulés pour l'orientation du support de l'organe de coupe, formant avec le pantographe un double parallélogramme articulé.

Selon l'invention, l'organe suiveur et l'un des leviers de l'ensemble d'orientation sont constitués d'une pièce unique articulée sur le pantographe montée à coulissement sur un bras pivotant autour de l'axe fixe susdit.

Le bras pivotant est, dans un mode de réalisation préféré de l'invention, solidaire d'une roue dentée, montée à rotation autour de l'axe fixe et engrénant avec une crémaillère d'entraînement. La crémaillère est portée par un vérin à tige traversante.

Le chemin de guidage se résume à un fer plat monté sur chant, la pièce formant l'organe suiveur étant équipée d'un jeu de 3 galets disposés de part et d'autre de ce fer plat.

Le pantographe est en fait constitué par un bras porteur du dispositif de coupe, comportant trois branches articulées bout à bout, la branche centrale étant doublée d'une bielle de plus faible section pour former un parallélogramme articulé avec les trois branches du bras, cette branche centrale étant reliée de manière articulée à la pièce susdite.

Enfin, pour réduire au maximum le nombre de pièces mises en oeuvre, le second système de leviers forme un premier parallélogramme articulé qui comprend la section de la branche centrale du bras articulé comprise entre l'articulation de la pièce et l'articulation de la branche d'extrémité, ladite pièce, une bielle articulée à la pièce et à une platine elle-même articulée au bras au point d'articulation des seconde et troisième branches, et un second parallélogramme articulé comprenant la troisième branche, la platine, le support de l'organe de coupe articulé à la troisième branche et une bielle doublant la troisième branche et articulée à la platine et au support de l'organe de coupe.

L'invention sera mieux comprise au cours de la description donnée ci-après à titre purement indicatif et non limitatif qui permettra d'en dégager les avantages et les caractéristiques secondaires.

Il sera fait référence aux dessins annexés dans lesquels :
- la figure 1 est une vue de dessus schématique du dispositif selon l'invention,

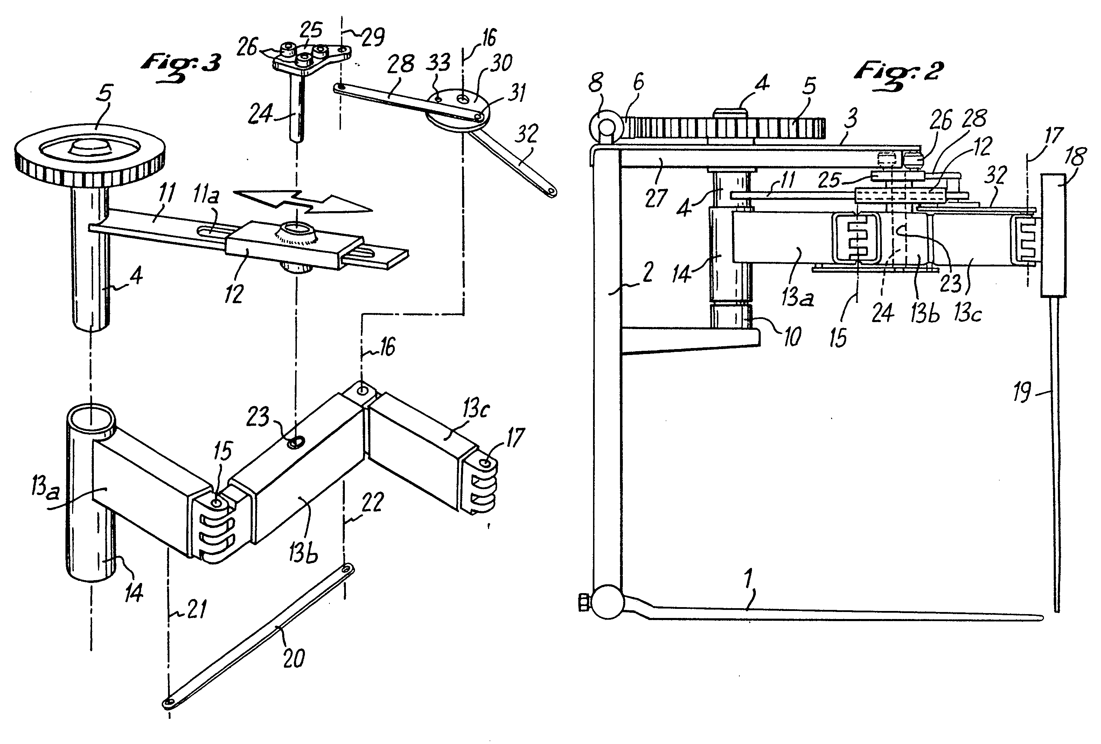

- la figure 2 est une vue en élévation de ce dispositif,
- la figure 3 montre par une vue éclatée les divers éléments constitutifs du mécanisme d'entraînement du dispositif de coupe.

En se reportant à ces figures, on voit que la fourche selon l'invention comporte des dents horizontales 1 solidaires d'un bâti arrière 2 au sommet duquel, surplombant les dents, est fixée une plaque 3 de support du mécanisme d'entraînement du dispositif de coupe.

La plaque supérieure 3 porte un axe 4 sensiblement perpendiculaire au plan des dents 1. Cet axe peut tourner sur lui-même dans un palier prévu à cet effet.

Au-dessus de la plaque 3, une roue dentée 5 est calée en rotation sur l'axe 4. Cette roue 5 engrène avec une crémaillère 6 qui est portée par le cylindre 7 d'un vérin 8 qui possède une tige traversante 9 attelée par ses deux extrémités au bâti arrière 2 de la fourche. Ce vérin à double effet permet de déplacer la crémaillère le long de la tige 9 et donc d'entraîner en rotation dans l'un ou l'autre sens la roue 5 donc l'arbre 4.

La partie inférieure de l'arbre 4 est soutenue par un palier d'extrémité 10 solidaire également du bâti arrière 2.

Un bras 11 radial est, sous la plaque 3, solidaire de l'arbre 4. Ce bras 11 constitue la coulisse pour un coulisseau 12 ou chariot d'entraînement d'un ensemble d'organes qui seront décrits ci-après.

L'axe 4 constitue également l'axe de pivotement pour un bras de support articulé 13 comportant trois parties 13a, 13b et 13c, la partie 13a portant à l'une de ses extrémités le palier de pivotement 14 du bras sur l'axe 4, la partie 13b étant articulée par ses extrémités 15, 16 aux parties 13a et 13c et la partie 13c présentant à son extrémité libre un point d'articulation 17 pour un support 18 de l'organe de coupe 19. Les parties ou branches 13a, 13b, 13c du bras de support 13 sont de forte section comparée à la section de la bielle 20 avec laquelle ces branches forment un pantographe.

La bielle 20 est donc une bielle parallèle à la section centrale 13b du bras 13 et articulée sur les branches 13a et 13c autour des points d'articulation 21 et 22. De manière connue l'extrémité 17 de la section 13c du bras 13 décrit une figure homothétique de celle décrite par n'importe quel point de la branche centrale 13b et en particulier par un point médian matérialisé par l'axe d'un orifice traversant 23.

Dans cet orifice 23 on peut donc mettre en place un axe 24 qui aura au préalable traversé le chariot 12 coulissant sur le bras 11, ce dernier possédant une lumière 11a pour le passage de l'axe 24. L'extrémité supérieure de l'axe 24 est équipée d'une platine 25 de support pour trois galets 26. Ces galets sont destinés à coopérer avec un chemin de guidage stationnaire, constitué par un fer plat 27 mis en forme et porté sur chant par la plaque supérieure 3.

On comprend que l'ensemble axe 24, platine 25 constitue un moyen de liaison du bras rotatif 11 et du pantographe 13, 20, si bien qu'une rotation de la roue dentée 5 entraîne une déformation du pantographe donc une courbe décrite par le support 18 des organes de coupe.

Cette courbe sera une courbe homothétique de celle définie par le guide 27 qui pourra être dessiné de manière que le support 18 décrive sensiblement le contour 1a dans lequel les dents 1 sont inscrites, puisque l'orifice 23 , donc un point du pantographe, est contraint de suivre ce guide grâce aux galets 26.

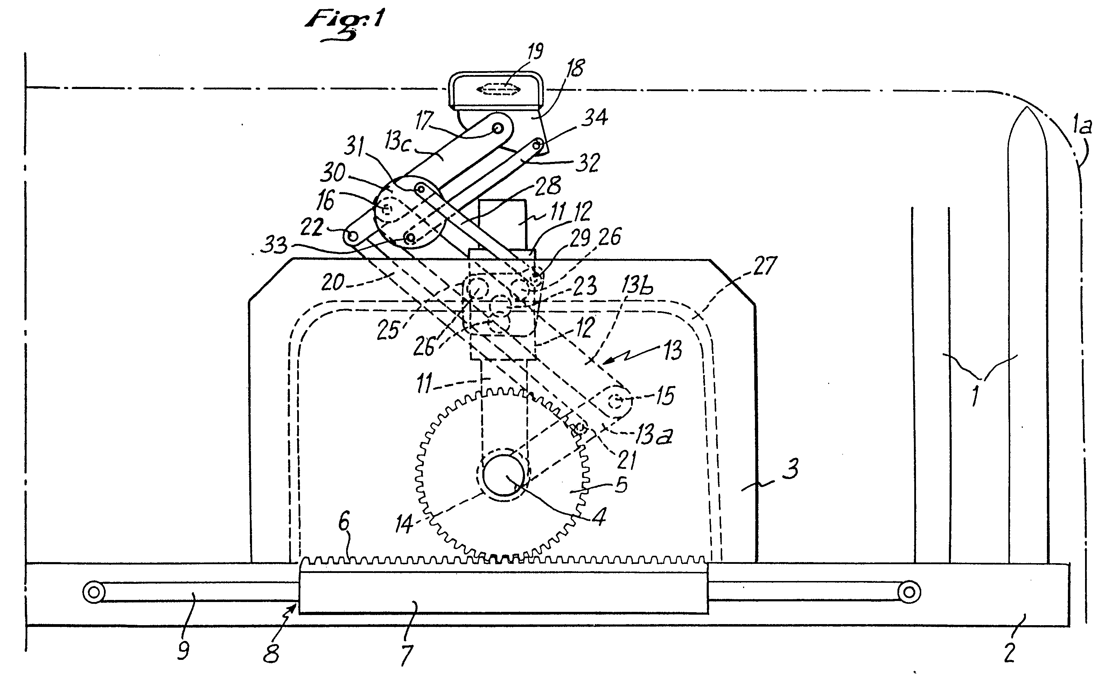

Le dispositif selon l'invention comporte en outre un second ensemble de leviers articulés pour orienter convena blement le support de l'organe de coupe. En effet, cet organe de coupe est constitué par au moins une lame qui doit présenter l'un de ses fils frontalement par rapport à son sens de déplacement. On voit sur la figure 1 que la trajectoire de la lame est constituée par trois côtés d'un rectangle à coins arrondis. La largeur de lame 19 doit donc être maintenue confondue avec cette trajectoire.

Le second ensemble de leviers articulés comprend, à cet effet, une bielle 28 parallèle à la branche centrale 13b du bras 13 et articulée sur la platine 25 au point 29 par l'une de ses extrémités et à une platine secondaire 30 (ici un disque) elle-même articulée sur le bras 13 autour du point 16, autour d'un point 31. Les quatre points d'articulation 23 de la platine 25 sur la branche 13b, 29 de la bielle 28 sur la platine 25, 31 de cette bielle sur la platine secondaire 30 et 16 de la platine 30 sur le bras 13 forment les quatre sommets d'un parallélogramme déformable, si bien que l'orientation de la platine 30 reste toujours identique à l'orientation de la platine 25 puisqu'elles matérialisent deux côtés opposés de ce parallélogramme.

De même une bielle 32, parallèle à la section 13c du bras 13 est articulée en 33 sur la platine 30 et en 34 sur le support 18 de lame. Les quatre points d'articulation 16, 33, 34 et 17 sont également les sommets d'un parallélogramme déformable si bien que le support 18, donc la lame 19, conserve une orientation identique à celle de la platine 30. Autrement dit, toute variation d'orientation angulaire de la platine 25 entraîne une variation d'orientation angulaire de la lame 19 de même amplitude (autour d'une direction parallèle à l'axe 4). Comme la platine 25, par le jeu des galets 26 disposés de part et d'autre du guide 27 suit l'orientation de ce guide, la lame 19 si elle est initialement orientée parallèlement à ce guide, lui reste parallèle.

En fonctionnement, on place, par la commande du vérin 8, le bras 11 dans une orientation sensiblement paral lèle au bâti arrière 2. La lame 19 se trouve alors placée à une extrémité du contour 1a. On fait pénétrer les dents 1 de la fourche dans la matière à prélever, puis on alimente le vérin pour faire tourner le bras 11 d'environ 180° autour de l'axe 4. La lame 19 décrit la totalité du contour 1a ce qui produit la découpe de la matière inscrite dans ce contour. Cette matière ainsi est détachée de la masse ensilée, est portée par les dents 1 et peut être transportée vers un lieu de déchargement.

L'invention trouve une application intéressante dans le domaine du matériel agricole.

## Revendications

1. Fourche pour le prélèvement d'une matière ensilée comprenant :
- un bâti (2) pourvu de dents (1) parallèles inscrites dans un contour (1a) approximativement rectangulaire,
- un dispositif de coupe comprenant un support (18) pour un organe de coupe (19),
- un premier ensemble de leviers (13,20) articulés formant un pantographe reliant le dispositif de coupe à un axe fixe (4) supporté perpendiculairement au plan des dents (1) et à une distance déterminée de celui-ci,
- un organe suiveur (25) solidaire du pantographe et coopérant avec un chemin de guidage (27) fixe homothétique du contour des dents (1a),
- un second ensemble de leviers (25,28, 30, 32) articulés pour l'orientation du support de l'organe de coupe, formant avec le pantographe (13,20) un double parallélogramme articulé, caractérisée en ce que l'organe suiveur et l'un des leviers de l'ensemble d'orientation sont constitués d'une pièce (25) unique articulée sur le pantographe montée à coulissement sur un bras pivotant (11) autour de l'axe fixe (4) susdit.

2. Fourche selon la revendication 1 caractérisée en ce que le bras pivotant (11) susdit est solidaire d'une roue dentée (5), montée à rotation autour de l'axe fixe (4) et engrénant avec une crémaillère (6) d'entraînement.

3. Fourche selon la revendication 2 caractérisée en ce que la crémaillère (6) est portée par le cylindre (7) d'un vérin (8) à tige traversante (9).

4. Fourche selon l'une quelconque des revendications précédentes caractérisée en ce que le chemin de guidage (27) est constitué par un fer plat sur chant, la pièce susdite (25) étant équipée d'un jeu de trois galets (26) disposés de part et d'autre de ce fer plat (27).

5. Fourche selon l'une quelconque des revendications précédentes, caractérisée en ce que le pantographe est constitué par un bras porteur (13) du dispositif de coupe, comportant trois branches (13a, 13b, 13c) articulées bout à bout, la branche centrale (13b) étant doublée d'une bielle (20) de plus faible section pour former un parallélogramme articulé avec les trois branches du bras, cette branche centrale (13b) étant reliée de manière articulée à la pièce (25) susdite.

6. Fourche selon la revendication 5 caractérisée en ce que le second ensemble de leviers forme un premier parallélogramme articulé qui comprend la section de la branche centrale (13b) du bras articulé comprise entre l'articulation (23) de la pièce (25) et l'articulation (16) de la branche d'extrémité (13c), ladite pièce (25), une bielle (28) articulée (29) à la pièce (25) et à une platine (30) elle-même articulée au bras (13) au point d'articulation (16) des seconde et troisième branches, et un second parallélogramme articulé comprenant la troisième branche (13c), la platine (30), le support (18) de l'organe de coupe articulé à la troisième branche (13c) et une bielle (32) doublant la troisième branche (13c) et articulée à la platine (30) et au support (18) de l'organe de coupe.

Fig.1

Fig.2

Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A,D | EP-A-41445 (BOTON)<br>* page 4, ligne 15 - page 10, ligne 22; figures 1-5 * | 1, 4, 5 | A01F25/20 |
| | --- | | |
| A | DE-A-3411790 (UNGRUH)<br>* page 5, ligne 12 - page 13, ligne 18; figures 1-9 * | 1 | |
| | --- | | |
| A | EP-A-162795 (KUHN)<br>* page 2, ligne 24 - page 6, ligne 15; figures 1-4 * | 2, 3 | |
| | ----- | | |

DOMAINES TECHNIQUES
RECHERCHES (Int. Cl.4 )

A01F

Le présent rapport a été établi pour toutes les revendications

| Lieu de la recherche | Date d'achèvement de la recherche | Examinateur |
|---|---|---|
| LA HAYE | 29 MAI 1989 | VERMANDER R.H. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P0402)